# EUROPÄISCHE PATENTSCHRIFT

(11) **EP 1 895 210 B1**
(45) Veröffentlichungstag und Bekanntmachung des Hinweises auf die Patenterteilung: **11.08.2010**
(21) Anmeldenummer: 07016815.8
(22) Anmeldetag: 28.08.2007
(51) Int. Cl.: F16K 5/06, F16K 27/06, F16K 31/04, F16K 31/05

(54) **Motorgetriebenes Ventil**
Motor-driven valve
Soupape motorisée

(30) Priorität: 28.08.2006 DE 202006013186 U
(43) Veröffentlichungstag der Anmeldung: 05.03.2008
(73) Patentinhaber: Gebr. Kemper GmbH + Co. KG Metallwerke, 57462 Olpe (DE)
(72) Erfinder: Stader, Rolf-Peter, 53819 Neunkirchen (DE); Theile, Tobias, 57489 Drolshagen (DE)
(74) Vertreter: Grünecker, Kinkeldey, Stockmair & Schwanhäusser Anwaltssozietät

(56) Entgegenhaltungen:
- EP-A- 1 672 261
- WO-A-00/71917
- WO-A-2005/108839
- DE-U1- 20 008 222
- US-A1- 2004 099 833

## Beschreibung

Die vorliegende Erfindung betrifft ein motorgetriebenes Ventil für die Trinkwasserinstallation. Bei solchen Ventilen wird die Stellung des in einem Ventilgehäuse aufgenommenen Ventilkörpers über einen steuerbaren Antrieb vorgenommen. Üblicherweise werden die Antriebe als separate Bauteile zugeliefert und nicht von den Herstellern der Ventile als Systembauteile gefertigt. Zwar erfolgt die Verbindung zwischen dem Antriebsorgan des Antriebs und dem Stellelement über angepasste Verbindungselemente. Die Befestigung des Antriebes an dem Ventilgehäuse und die verdrehgesicherte Lagerung des Antriebes gegenüber dem Ventilgehäuse macht aber besondere Maßnahmen erforderlich.

So ist es zum einen bekannt, an dem Ventilgehäuse einen gesonderten Flansch anzubringen, welcher den Antrieb trägt und gegen welchen der Antrieb verschraubt ist. Auch kann zur Verdrehsicherung der Antrieb zwar über eine gesonderte Halteplatte gegenüber dem Ventilgehäuse befestigt sein. Zur Verdrehsicherung wird der Antrieb respektive das Antriebsgehäuse häufig jedoch mit einer Wandung des Gebäudes, in dem die Trinkwasserinstallation installiert ist, verbunden.

Die vorbekannte Lösung ist zum einen aufwändig, da der Flansch zur Befestigung des Antriebes gesondert an dem Ventil vorgesehen sein muss. Dadurch werden die Ventile klobig und aufwändig, was sich insbesondere als nachteilig bei der Massenherstellung von Ventilen erweist, die teilweise mit und teilweise ohne Antrieb eingebaut werden. Zwar können die Ventile an die jeweiligen Anforderungen individuell angepasst und es können Ventilgehäuse mit und andere ohne Halteflansch hergestellt werden. Dies führt allerdings zu Problemen bei der Warenwirtschaft und höheren Lagerhaltungskosten. Bei dem motorgetriebenen Ventil gemäß EP 1 672 261 wird der Formschluss durch Stifte erzielt.

Der vorliegenden Erfindung liegt daher die Aufgabe zugrunde, ein motorgetriebenes Ventil anzugeben, welches die vorbeschriebenen Nachteile nicht aufweist und welches insbesondere einfach wahlweise als motorgetriebenes Ventil und als nicht motorgetriebenes Ventil hergestellt bzw. eingesetzt werden kann.

Zur Lösung dieser Aufgabe wird mit der vorliegenden Erfindung ein motorgetriebenes Ventil mit den Merkmalen von Anspruch 1 vorgeschlagen.

Bevorzugte Weiterbildungen des motorgetriebenen Ventiles sind in den Unteransprüchen angegeben.

Mit der vorliegenden Anmeldung geschützt werden soll ferner ein Antrieb für ein motorgetriebenes Ventil, welches nach der Erfindung speziell angepasst ist und ein mit dem Formschlusselement des Ventilgehäuses zusammenwirkendes Formschlussgegenelement aufweist.

Weitere Einzelheiten und Vorteile der vorliegenden Erfindung ergeben sich aus der nachfolgenden Beschreibung in Verbindung mit der Zeichnung. In dieser zeigen:
- Figur 1: eine perspektivische Ansicht eines Ventils gemäß der vorliegenden Erfindung ohne Antrieb;
- Figur 2: eine teilweise geschnittene Längssichtansicht des in Figur 1 gezeigten Ventils mit einem schematisch dargestellten Antrieb;
- Figur 3: die in Figur 2 gezeigte Einzelheit II in vergrößerter Darstellung;
- Figur 4: eine Draufsicht auf die Unterseite des in Figur 2 schematisch dargestellten Antriebs und
- Figur 5: eine Längsschnittansicht durch das in den Figuren 1 bis 4 gezeigte Ausführungsbeispiel.

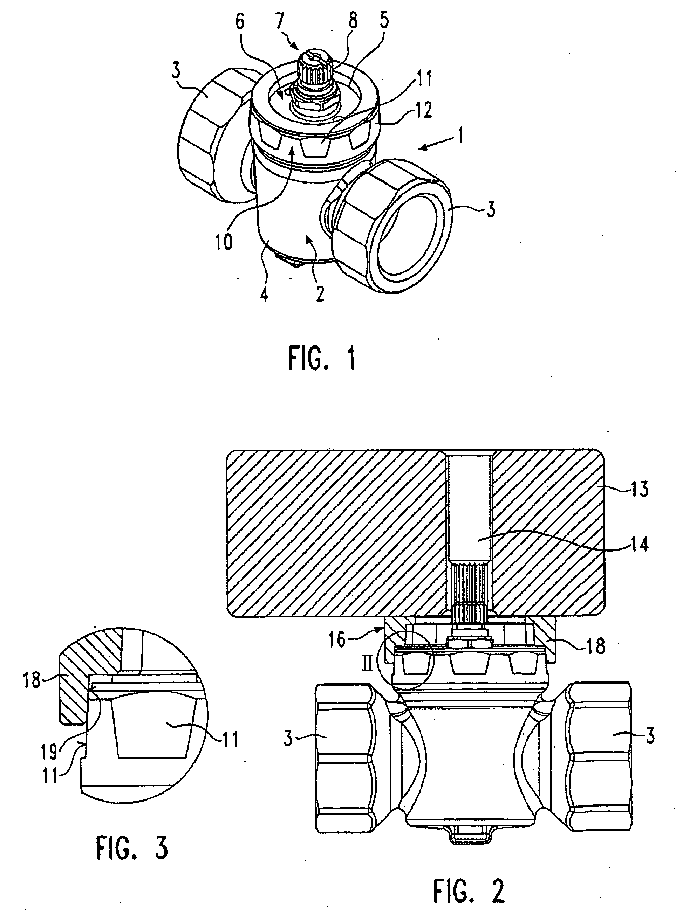

Die Figur 1 zeigt eine perspektivische Seitenansicht eines Ventils 1 mit einem Ventilgehäuse 2, welches Anschlüsse 3 für eine Rohrleitung (nicht dargestellt) ausbildet.

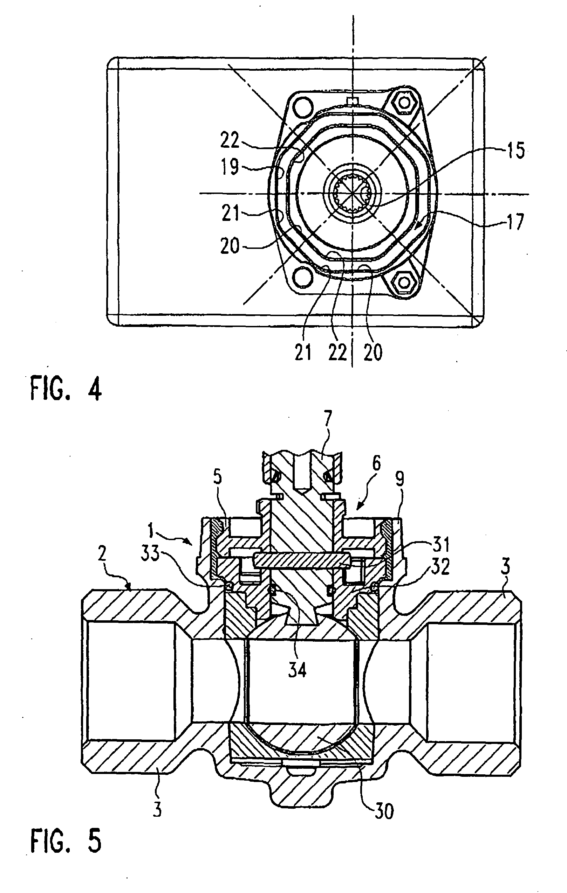

Das Ventilgehäuse 2 hat einen mittleren Zylinderabschnitt 4, in dem ein nicht dargestellter Ventilkörper drehbar gelagert ist. Das in Figur 1 gezeigte Ausführungsbeispiel kann ein Kugelventil sein, d. h. in dem Zylinderabschnitt 4 kann eine Kugel 30 als Ventilkörper drehbar gelagert sein (Figur 5). Der Zylinderabschnitt 4 hat eine durch einen Gehäusedeckel 5 verschlossene Einbringöffnung 6 zur Montage des Ventilkörpers. Der Gehäusedeckel 5 ist hierzu in ein an dem oberen Ende des Zylinderabschnitts 4 ausgeformtes Innengewinde eingeschraubt, dort verdrehsicher gehalten und gegenüber dem Ventilgehäuse 2 in einer nachfolgend noch näher beschriebenen Weise abgedichtet. Der Gehäusedeckel 5 weist eine zentrale Bohrung auf, durch welche ein als Spindel 7 gebildetes Stellelement, welches mit dem Ventilkörper verbunden ist, dichtend hindurchgeführt ist. Die Spindel 7 ist an ihrem freien Ende umfänglich mit einer Verzahnung 8 mit sich axial erstreckenden Zähnen versehen.

Wie der Längsschnittansicht in Figur 5 zu entnehmen ist, drückt der Gehäusedeckel 5 über einen die Spindel 7 durchsetzenden Stift 31 gegen eine Kappe 32, die über äußere und innere Dichtringe 33, 34 gegenüber dem Ventilgehäuse 2 bzw. der Spindel 7 abgedichtet und von dieser durchsetzt ist.

An dem freien oberen Ende im Bereich der Einbringöffnung 6 bildet der Zylinderabschnitt 4 einen Kranz 9, dessen Außenfläche im Wesentlichen ohne Absatz in die zylindrische Außenfläche des Zylinderabschnitts 4 übergeht und dessen Innenumfangsfläche das Innengewinde zur Verschraubung des Gehäusedeckels 5 ausbildet. Dieser Kranz 9 ist als ein relativ dünnwandiges Bauteil ausgeformt. Durch die Außenumfangsfläche des Kranzes 9 ist ein Formschlusselement 10 ausgebildet, welches hierzu in einer Draufsicht ebene, konisch nach oben geneigte (vergleiche Figur 2) Formschlussflächen 11 aufweist. Diese Formschlussflächen 11 sind in Bezug auf die Achse der Spindel 7 um etwa 5° nach innen geneigt und vorliegend gleichmäßig auf dem Umfang des Kranzes 9 verteilt angeordnet. In Umfangsrichtung des Kranzes 9 befinden sich zwischen den Formschlussflächen 11 jeweils Radienabschnitte 12, deren Krümmung im Wesentlichen der Krümmung des Zylinderabschnitts 4 entspricht. Die Formschlussflächen liegen innerhalb einer diese Radienabschnitte 12 enthaltenen Ringfläche.

Das in der Zeichnung gezeigte Ausführungsbeispiel hat einen Antrieb 13, auf dessen spezielle Gestaltung es nicht ankommt und der daher im Wesentlichen vollständig abgesehen von einem Antriebsorgan 14 als Blackbox dargestellt ist. Das Antriebsorgan 14 weist an seinem freien Ende eine der Verzahnung 8 korrespondierende Gegenverzahnung 15 auf, die zusammen mit der Verzahnung 8 eine formschlüssige drehfeste Verbindung zu der Spindel 7 bilden kann. An der dem Ventilgehäuse 2 zugewandten Unterseite weist der Antrieb 13 einen mit dem Gehäuse des Antriebes 13 fest verbundenen Flanschadapter 16 auf, der ein korrespondierend zu dem Formschlusselement 10 geformtes Formschlussgegenelement 17 ausbildet. Hierzu hat der Flanschadapter 16 einen gestuften Ringvorsprung 18, an dessen Innenumfangsfläche korrespondierend zu den Formschlussflächen 11 ebene Formschlussgegenflächen 19 ausgeformt sind. Diese sind relativ zu der Drehachse des Antriebsorgans 14 in gleicher Weise geneigt und damit konisch ausgebildet, wie die Formschlussflächen 11.

Zwischen diesen in Figur 2 mit den Formschlussflächen 11 in Wirkverbindung stehenden Formschlussgegenflächen 19 und dem Antrieb 13 bildet der gestufte Ringvorsprung 18 einen weiteren Kranz von zweiten Formschlussgegeriflächen 20 aus, dessen effektiver Durchmesser kleiner als der Durchmesser des zuvor beschriebenen Kranzes erster Formschlussgegenflächen 19 ist. Dadurch ist es möglich, über den Flanschadapter 16 unterschiedlich große Ventilgehäuse 2 mit Zylinderabschnitten 4 unterschiedlicher Durchmesser an einem Antrieb 13 zu befestigen. Mit anderen Worten kann derselbe Antrieb mit Ventilen 1 unterschiedlicher Nenndurchmesser respektive unterschiedlicher Durchmesser der Zylinderabschnitte 4 verbunden werden. Dabei entspricht die Ausgestaltung des an dem Ventilgehäuse des kleineren Ventils vorgesehenen Formschlusselementes der Ausgestaltung des in Figur 1 gezeigten Formschlusselementes 10. Die Kontur der ersten und zweiten Formschlussgegenflächen 19, 20 ist im Übrigen deutlich der Darstellung gemäß Figur 4 zu entnehmen. Es ergibt sich, dass zwischen den jeweiligen ebenen Formschlussgegenflächen 19 bzw. 20 in gleicher Weise Radienabschnitte 21, 22 ausgebildet sind, wobei die den ersten Formschlussgegenflächen 19 zugeordneten Radienabschnitte 21 gemäß den Radienabschnitten 12 des Formschlusselementes ausgeformt sind.

Das in Figur 1 gezeigte Ventil kann endseitig der Spindel 7 über den Kranz 9 verdrehfest mit einem Handrad verbunden werden. Alternativ kann auch der Antrieb 13 auf das Ventilgehäuse 2 aufgesetzt werden. Hierzu muss lediglich das mit dem Flanschadapter 16 fest verbundene Antriebsgehäuse oberseitig auf den Kranz 9 aufgeschoben werden, und zwar so, dass die Formschlussgegenflächen 19 mit den Formschlussflächen 11 fluchten. Das Antriebsorgan 14 ist vorzugsweise länger als der Ringvorsprung 18 ausgeformt, so dass bei dieser Montage zunächst die Verzahnung 8 in Eingriff mit der Gegenverzahnung 15 gebracht wird. Durch Verschwenken kann nunmehr das Formschlussgegenelement 17 relativ zu dem Formschlusselement 10 bei bereits erzeugter Wirkverbindung zwischen dem Antriebsorgan 14 und der Spindel 7 ausgerichtet werden. Bei einer fortscheitenden axialen Zustellbewegung zwischen Antrieb 13 und Ventil 1 kommen schließlich die konischen Formschlussflächen 11 zur Anlage an die Formschlussgegenflächen 19. Aufgrund der Neigung der beiderseitigen Flächen um etwa 5° ergibt sich nach leichtem Aufdrücken des Antriebs 13 gegen das Ventilgehäuse 2 aufgrund der Reibung eine Selbsthemmung, so dass der Antrieb 13 unverlierbar mit dem Ventilgehäuse 2 verbunden ist. Diese Ausführungsform eignet sich insbesondere in Verbindung mit einem Motor, der zunächst nach der Montage bei erstmaliger Betätigung die Offen- und Geschlossenstellung des Ventils ermittelt und sich daraufhin vorzugsweise selbsttätig kalibriert.

Alternativ kann vorzugsweise auf Seiten des Antriebs 13 ein Fixierungsmittel vorgesehen sein, beispielsweise in Form einer Klemmschraube oder dergleichen, durch welche der Antrieb 13 axial mit Bezug auf die Spindelachse gegenüber dem Ventilgehäuse festgelegt wird. Eine solche Klemmschraube kann beispielsweise gegen den Kranz 9 drücken. Alternativ kann auch ein entsprechendes Sicherungsmittel das Antriebsorgan kraftschlüssig gegenüber der Spindel bzw. einem auf die Spindel aufgeschraubten Kupplungsstück verbunden werden, wodurch nicht nur die axiale Fixierung des Antriebs 13 gegenüber dem Ventilgehäuse 3, sondern auch eine sichere Übertragung des Drehmomentes zwischen dem Antriebsorgan und der Spindel sichergestellt wird.

Bei dem gezeigten Ausführungsbeispiel sind an dem Formschlusselement 10 acht identische Formschlussflächen 11 nach Art eines Polygons an dem oberen ringförmigen Ende des Gehäusedeckels 5 an dessen Außenumfangsfläche ausgebildet. Benachbarte Formschlussflächen 11 sind jeweils um 45° winkelig gegeneinander versetzt. Dementsprechend kann der Antrieb 13 relativ zu dem Ventil 1 in acht verschiedenen vorbestimmten Winkelpositionen fixiert werden. Dadurch kann der asymmetrisch von der Achse des Antriebsorgans 14 abragende Teil des Antriebs 13 bei relativ engen Montagegegebenheiten von dem Monteur auf einfache Weise in dem verbleibenden Bauraum angeordnet werden. Ein gesondertes Werkzeug oder dergleichen ist hierzu nicht erforderlich. Vorzugsweise hat das Polygon des Ventilgehäuses 2 wenigstens vier Formschlussflächen 11, die in der genannten Weise ausgebildet sind. Besonders bevorzugt sind zwischen sechs und zehn Polygonflächen zur Ausbildung der Formschlussflächen 11 vorgesehen, denen entsprechende Gegenflächen 19 auf Seiten des Formschlussgegenelementes 17 zugeordnet sind.

Das in den Figuren 1 bis 4 gezeigte Ausführungsbeispiel kann ohne Weiteres modifiziert werden. So ist es denkbar, die Spindel 7 axial als Kupplungsstück zu verlängern, welches kraft- oder reibschlüssig mit einem korrespondierend hierzu ausgebildeten Antriebsorgan 14 des Antriebs zusammenwirken kann, um das Antriebsmoment des Antriebes 13 auf das Stellelement zu übertragen.

Die Montage des Antriebs 13 an dem Ventilgehäuse kann im Übrigen werkzeugfrei erfolgen. Im Falle eines axial verlängerten Kupplungsstücks kann dieses das Antriebsgehäuse durchragen und Endseitig eine das Antriebsgehäuse gegenüber dem Ventilgehäuse 2 sichernde Knebelschraube oder dergleichen aufweisen, durch welche der Ventilkörper bei Dberbrückung des Antriebs manuell gestellt werden kann.

### Bezugszeichenliste

- 1: Ventil
- 2: Ventilgehäuse
- 3: Anschluss
- 4: Zylinderabschnitt
- 5: Gehäusedeckel
- 6: Einbringöffnung
- 7: Spindel
- 8: Verzahnung
- 9: Kranz
- 10: Formschlusselement
- 11: Formschlussfläche
- 12: Radienabstand
- 13: Antrieb
- 14: Antriebsorgan
- 15: Gegenverzahnung
- 16: Flanschadapter
- 17: Formschlussgegenelement
- 18: Ringvorsprung
- 19: Formschlussgegenfläche
- 20: zweite Formschlussgegenfläche
- 21: Radienabschnitt (zwischen ersten Formschlussgegenflächen)
- 22: Radienabschnitt (zwischen zweiten Formschlussgegenflächen)
- 30: Kugel
- 31: Stift
- 32: Kappe
- 33: äußerer Dichtring
- 34: innerer Dichtring

## Patentansprüche

1. Motorgetriebenes Ventil (1) für die Trinkwasserinstallation mit einem Ventilgehäuse (2) mit Anschlüssen (3) zu einer Rohrleitung und einem in dem Ventilgehäuse (2) beweglichen Ventilkörper (30), der mit einem an der Außenseite des Ventilgehäuses (2) freiliegenden Stellelement (7) verbunden ist, und einem steuerbaren Antrieb (13), dessen Antriebsorgan (14) in Wirkverbindung mit dem Stellelement steht, wobei das Ventilgehäuse (2) mit einem Formschlusselement (10) und der Antrieb (13) mit einem Formschlussgegenelement (17) versehen ist, über welche der Antrieb (13) verdrehfest mit dem Ventilgehäuse (2) verbindbar ist
**dadurch gekennzeichnet,**
**dass** das Ventilgehäuse (2) einen das Stellelement (7) umfänglich umgebenden Kranz (9) umfasst, an dessen Umfang das Formschlusselement (10) bildende Formschlussflächen (11) verteilt ausgeformt sind, die mit an den Formschlussgegenelement (17) vorgesehenen Gegenflächen (19) zur Anlage bringbar sind, wobei identische Formschlussflächen (11) an dem Außenumfang und zugeordnete Gegenflächen (19) an dem Antrieb (13) vorgesehen sind, so dass der Antrieb (13) durch Anlage der Formschlussflächen (11) an zugeordneten Gegenflächen (19) in verschiedenen Winkelpositionen verdrehfest an dem Ventilgehäuse (2) fixierbar ist.

2. Motorgetriebenes Ventil nach Anspruch 1, **dadurch gekennzeichnet, dass** die Formschlussflächen (11) als ebene Flächen einer polygonalen Ausgestaltung an dem Ventilgehäuse (2) vorgesehen sind.

3. Motorgetriebenes Ventil nach einem der vorherigen Ansprüche, **dadurch gekennzeichnet, dass** die Formschlussflächen (11) und die Formschlussgegenflächen (19) konisch ausgebildet sind.

4. Motorgetriebenes Ventil nach einem der vorherigen Ansprüche, **dadurch gekennzeichnet, dass** das Stellelement als Spindel (7) drehbar in dem Ventilgehäuse (2) gelagert ist.

5. Motorgetriebenes Ventil nach einem der vorherigen Ansprüche, **dadurch gekennzeichnet, dass** die Formschlussflächen in einem Winkel von zwischen 2° und 10°, vorzugsweise von zwischen 3° und 7° relativ zu der Drehachse des Stellelementes (7) geneigt sind.

6. Motorgetriebenes Ventil nach einem der vorherigen Ansprüche, **dadurch gekennzeichnet, dass** der Kranz an seiner Innenseite ein Innengewinde ausbildet, mit welchem ein das Ventilgehäuse (2) abschließender, von dem Stellelement (7) durchsetzter Gehäusedeckel (5) im Eingriff ist.

7. Motorgetriebenes Ventil nach einem der vorherigen Ansprüche, **dadurch gekennzeichnet, dass** die Formschlussflächen (11) nach Art eines Polygones mit sechs bis zehn, vorzugsweise acht ebenen Formschlussflächen (11) ausgebildet sind.

8. Motorgetriebenes Ventil nach einem der vorherigen Ansprüche, **dadurch gekennzeichnet, dass** das Antriebsorgan (14) durch axiales Aufschieben verdrehfest mit dem Stellelement (7) verbindbar ist, und dass das Antriebsorgan (14) und das Stellelement (7) einerseits und das Formschlusselement (10) und das Formschlussgegenelement (19) andererseits so aufeinander abgestimmt sind, dass nach dem Aufschieben des Antriebs auf das Ventilgehäuse (9) sowohl das Antriebsorgan (14) in Wirkverbindung mit dem Stellelement (7) als auch das Formschlusselement (10) mit dem Formschlussgegenelement (17) in Wirkverbindung steht.

9. Motorgetriebenes Ventil nach Anspruch 8, **dadurch gekennzeichnet, dass** das Antriebsorgan kraftschlüssig mit dem Stellelement verbunden ist und vorzugsweise ein Sicherungsmittel vorgesehen ist, durch welches der Antrieb (13) bezogen auf die axiale Richtung des Stellelementes (7) festgelegt ist.

10. Motorgetriebenes Ventil nach Anspruch 8, **dadurch gekennzeichnet, dass** das Antriebsorgan (14) und das Stellelement (7) einerseits und das Formschlusselement (10) und das Formschlussgegenelement (19) andererseits so aufeinander abgestimmt sind, dass beim Aufschieben des Antriebs (13) zunächst das Antriebsorgan (14) in Wirkverbindung mit dem Stellelement (7) gebracht wird.

11. Motorgetriebenes Ventil nach einem der vorherigen Ansprüche, **dadurch gekennzeichnet, dass** das Formschlussgegenelement (17) als separates Bauteil ausgebildet und an dem Antrieb (13) befestigt ist.

12. Motorgetriebenes Ventil nach einem der vorherigen Ansprüche, **dadurch gekennzeichnet, dass** das Formschlussgegenelement (17) mehrere in axialer Richtung des Antriebsorgans (14) gestufte Kränze von Formschlussgegenflächen (19; 20) mit unterschiedlichen wirksamen Querschnitten aufweist.

13. Antrieb für ein motorgetriebenes Ventil für die Trinkwasserinstallation **gekennzeichnet durch** ein Formschlussgegenelement (17) nach einem der vorhergehenden Ansprüche.

14. Ventil für eine Trinkwasserinstallation **gekennzeichnet durch** ein Formschlusselement nach einem der vorherigen Ansprüche.

## Claims

1. Motor-driven valve (1) for a drinking water installation having a valve housing (2) with connections (3) to a pipe line and a valve body (30) which is movable in the valve housing (2) and is connected to an adjusting element (7) which is exposed on the outer side of the valve housing (2), and a controllable drive (13), whose drive member (14) is operatively connected to the adjusting element, wherein the valve housing (2) is provided with a form-fitting element (10) and the drive (13) is provided with a form-fitting counter element (17), by means of which the drive (13) can be connected to the valve housing (2) in a rotationally fixed manner, **characterised in that** the valve housing (2) comprises a ring (9) which circumferentially surrounds the adjusting element (7) and on whose periphery form-fitting surfaces (11), which form the form-titting element (10), are formed in a distributed manner and can be moved into abutment with counter surfaces (19) provided on the form-fitting counter element (17), wherein identical form-fitting surfaces (11) are provided on the outer periphery and allocated counter surfaces (19) are provided on the drive (13), so that the drive (13) can be fixed on the valve housing (2) in a rotationally fixed manner at different angular positions by the abutment of the form-fitting surfaces (11) against allocated counter surfaces (19).

2. Motor-driven valve as claimed in claim 1, **characterised in that** the form-fitting surfaces (11) are provided as planar surfaces of a polygonal configuration on the valve housing (2).

3. Motor-driven valve as claimed in any one of the preceding claims, **characterised in that** the form-fitting surfaces (11) and the form-fitting counter surfaces (19) are formed in a conical manner.

4. Motor-driven valve as claimed in any one of the preceding claims, **characterised in that** the adjusting element in the form of a spindle (7) is mounted in a rotatable manner in the valve housing (2).

5. Motor-driven valve as claimed in any one of the preceding claims, **characterised in that** the form-fitting surfaces are inclined at an angle of between 2° and 10°, preferably of between 3° and 7° relative to the rotational axis of the adjusting element (7).

6. Motor-driven valve as claimed in any one of the preceding claims, **characterised in that** on its inner side the ring forms an internal thread which is engaged by a housing cover (5) which closes off the valve housing (2) and has the adjusting element (7) passing through it.

7. Motor-driven valve as claimed in any one of the preceding claims, **characterised in that** the form-fitting surfaces (11) are formed in the manner of a polygon having six to ten, preferably eight, planar form-fitting surfaces (11).

8. Motor-driven valve as claimed in any one of the preceding claims, **characterised in that** the drive member (14) can be connected in a rotationally fixed manner to the adjusting element (7) by sliding it thereon in an axial manner, and that the drive member (14) and the adjusting element (7) on the one hand and the form-fitting element (10) and the form-fitting counter element (19) on the other hand are adapted to one another such that after the drive has been slid onto the valve housing (9) the drive member (14) is operatively connected to the adjusting element (7) and the form-fitting element (10) is operatively connected to the form-fitting counter element (17).

9. Motor-driven valve as claimed in claim 8, **characterised in that** the drive member is connected in a force-fitting manner to the adjusting element and preferably a locking means is provided, by means of which the drive (13) is fixed in relation to the axial direction of the adjusting element (7).

10. Motor-driven valve as claimed in claim 8, **characterised in that** the drive member (14) and the adjusting element (7) on the one hand and the form-fitting element (10) and the form-fitting counter element (19) on the other hand are adapted to one another such that when the drive (13) is slid on, the drive member (14) is initially moved into operative connection with the adjusting element (7).

11. Motor-driven valve as claimed in any one of the preceding claims, **characterised in that** the form-fitting counter element (17) is formed as a separate component and is attached to the drive (13).

12. Motor-driven valve as claimed in any one of the preceding claims, **characterised in that** the form-fitting counter element (17) comprises several rings of form-fitting counter surfaces (19; 20) which are stepped in the axial direction of the drive member (14) and have different effective cross-sections.

13. Drive for a motor-driven valve for a drinking water installation, **characterised by** a form-fitting counter element (17) as claimed in any one of the preceding claims.

14. Valve for a drinking water installation, **characterised by** a form-fitting element as claimed in any one of the preceding claims.

## Revendications

1. Vanne motorisée (1) pour une installation d'eau potable avec une cage de vanne (2) avec des raccords (3) à une canalisation et un corps de vanne (30) mobile dans la cage de vanne (2), corps qui est relié avec un élément de réglage (7) disposé librement sur la face extérieure de la cage de vanne (2), et un entraînement réglable (13) dont l'organe d'entraînement (14) est en liaison active avec l'élément de réglage, la cage de vanne (2) étant dotée d'un élément de forme (10) et l'entraînement (13) étant doté d'un élément opposé de forme (17), grâce auxquels l'entraînement (13) est reliable à sécurité de torsion à la cage de vanne (2),
**caractérisée en ce que**
la cage de vanne (2) comprend une couronne (9) entourant entièrement l'élément de réglage (7), sur le pourtour de laquelle les faces de forme (11) formant l'élément de forme (10) sont formées de manière distribuée, lesquelles sont amenables à l'installation par les faces opposées (19) prévues sur l'élément opposé de forme (10), des faces de forme (11) identiques étant prévues sur la périphérie extérieure et des faces opposées (19) correspondantes étant prévues sur l'entraînement (13), de manière à ce que l'entraînement (13) soit fixable par l'application des faces de forme (11) sur des faces opposées correspondantes (19) dans diverses positions angulaires à sécurité de torsion sur la cage de vanne (2).

2. Vanne motorisée selon la revendication 1, **caractérisée en ce que** les faces de forme (11) sont prévues en tant que faces égales d'une configuration polygonale sur la cage de vanne (2).

3. Vanne motorisée selon l'une des revendications qui précèdent, **caractérisée en ce que** les faces de forme (11) et les faces opposées de forme (19) sont de forme conique.

4. Vanne motorisée selon l'une des revendications qui précèdent, **caractérisée en ce que** l'élément de réglage est logé en tant que broche (7) de manière pivotable dans la cage de vanne (2).

5. Vanne motorisée selon l'une des revendications qui précèdent, **caractérisée en ce que** les faces de forme sont inclinées dans un angle compris entre 2° et 10°, de préférence entre 3° et 7° relativement à l'axe de rotation de l'élément de réglage (7).

6. Vanne motorisée selon l'une des revendications qui précèdent, **caractérisée en ce que** la couronne forme sur sa face intérieure un filet intérieur avec lequel s'engrène un couvercle de cage (7) fermant la cage de vanne en charge par l'élément de réglage (7).

7. Vanne motorisée selon l'une des revendications qui précèdent, **caractérisée en ce que** les faces de forme (11) sont formées, à l'instar d'un polygone, par six à dix, de préférence huit faces de forme planes (11).

8. Vanne motorisée selon l'une des revendications qui précèdent, **caractérisée en ce que** l'organe d'entraînement (14) est reliable à sécurité de torsion avec l'élément de réglage (7) par coulissement axial et que l'organe d'entraînement (14) et l'élément de réglage (7), d'une part, et l'élément de forme (10) et l'élément opposé de forme (19) sont adaptés l'un à l'autre, et d'autre part, de manière à ce qu'après le coulissement de l'entraînement sur la cage de vanne (9), tant l'élément d'entraînement (14) est en liaison active avec l'élément de réglage (7) que l'élément de forme (10) est en liaison active avec l'élément opposé de forme (17).

9. Vanne motorisée selon la revendication 8, **caractérisée en ce que** l'organe d'entraînement est relié mécaniquement avec l'élément de réglage et que, préférentiellement, un moyen de fixation est prévu grâce auquel l'entraînement (13) est fixé par rapport au sens axial de l'élément de réglage (7) .

10. Vanne motorisée selon la revendication 8, **caractérisée en ce que** l'organe d'entraînement (14) et l'élément de réglage (7), d'une part, et l'élément de forme (10, ainsi que l'élément opposé de forme (19), d'autre part, sont adaptés l'un à l'autre de manière telle que, lors du coulissement de l'entraînement (13), c'est l'organe de commande (14) qui est d'abord mis en liaison active avec l'élément de réglage (7).

11. Vanne motorisée selon l'une des revendications qui précèdent, **caractérisée en ce que** l'élément opposé de forme (17) a la forme d'un composant séparé et est fixé sur l'entraînement (13).

12. Vanne motorisée selon l'une des revendications qui précèdent, **caractérisée en ce que** l'élément opposé de forme (17) présente plusieurs couronnes, étagées dans le sens axial de l'organe d'entraînement (14), de faces opposées de forme (19 ; 20) avec des sections efficaces différentes.

13. Entraînement pour une vanne motorisée pour une installation d'eau potable, **caractérisé par** un élément opposé de forme (17) selon l'une des revendications qui précèdent.

14. Vanne pour une installation d'eau potable, **caractérisée par** un élément de forme selon l'une des revendications qui précèdent.
